# FASCICULE DE BREVET EUROPEEN

(11) **EP 1 763 695 B1**
(45) Date de publication et mention de la délivrance du brevet: **03.08.2011**
(21) Numéro de dépôt: 05778245.0
(22) Date de dépôt: 21.06.2005
(51) Int. Cl.: G02B 27/01, G02C 5/00

(54) **AFFICHEUR OPHTALMIQUE COMPORTANT UN DISPOSITIF DE REGLAGE A L'ECART PUPILLAIRE DE L'UTILISATEUR**
OPHTHALMISCHE ANZEIGE MIT VORRICHTUNG ZUR ANPASSUNG AN DEN PUPILLENABSTAND DES BENUTZERS
OPHTHALMIC DISPLAY COMPRISING A DEVICE FOR ADJUSTMENT TO THE USER'S PUPIL SPACING

(30) Priorité: 02.07.2004 FR 0451426
(43) Date de publication de la demande: 21.03.2007
(73) Titulaire: ESSILOR INTERNATIONAL (Compagnie Générale d'Optique), 94227 Charenton le Pont (FR)
(72) Inventeur: MOLITON, Renaud, F-94227 CHARENTON-LE-PONT (FR); ROUSSEAU, Benjamin, F-94227 CHARENTON-LE-PONT (FR)
(74) Mandataire: Lenne, Laurence
(86) Numéro de dépôt international: PCT/FR2005/050475
(87) Numéro de publication internationale: WO 2006/030137

(56) Documents cités:
- EP-A- 0 551 781
- US-A- 5 486 841
- US-A- 5 539 422
- US-A1- 2002 113 755
- US-B1- 6 177 952
- US-B1- 6 384 982

## Description

La présente invention concerne un afficheur ophtalmique comportant un imageur optique destiné à permettre la projection d'informations, de type images ou multimédia et de préférence associé à une lentille. Est ici appelée « lentille » un système optique qui peut notamment être positionné dans une monture de lunettes.

Il est connu du brevet US 5 886 822 de réaliser une lentille ophtalmique présentant un insert de projection. Un tel insert de projection est constitué d'un imageur optique destiné à mettre en forme les faisceaux optiques issus d'un système électronique et optique de génération de faisceaux lumineux à partir d'un signal électronique, de type écran miniature, diode laser, diode électroluminescente. L'imageur optique dirige les faisceaux optiques vers l'oeil du porteur pour permettre la visualisation du contenu informationnel.

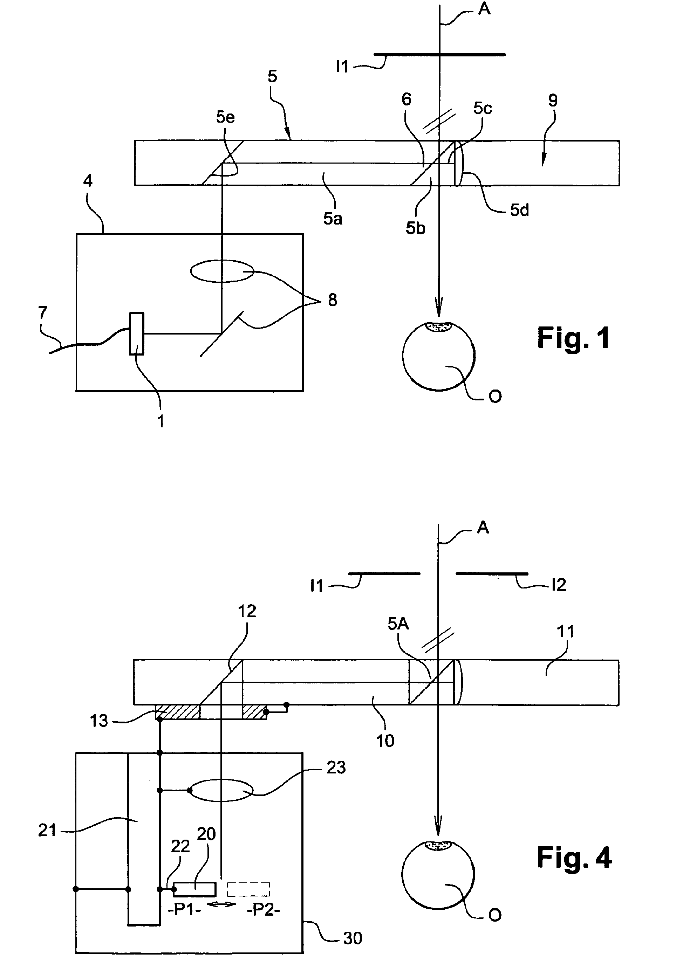

Un exemple d'afficheur connu est représenté schématiquement plus précisément sur la figure 1.

A titre d'exemple, l'imageur optique est du même type que celui décrit dans le brevet US 5 886 822 déjà mentionné.

Un signal électronique porteur d'une information est amené à un écran miniature 1 par un câble 7. A partir de ce signal, l'écran miniature 1, éclairé par un projecteur de fond, génère une image pixellisée correspondant à l'information. A titre d'exemple, il peut être utilisé un écran « KOPIN Cyberdisplay 320 color » générant des images de 320 x 240 pixels et d'une dimension de 4,8 mm x 3,6 mm. L'écran 1 est référencé au moyen d'une interface mécanique par rapport à l'imageur optique 5. Une coque de protection 4 protège tout ou partie de l'ensemble. Des composants optiques 8, ici un miroir et une lentille, sont associés à l'écran 1.

Cet imageur optique 5 se compose ici d'un prisme de propagation 5a, d'un contre-prisme 5b, d'une lame quart d'onde 5c et d'un miroir de Mangin sphérique 5d. Le miroir de Mangin sphérique est une lentille plansphérique pour laquelle la face sphérique a été rendue réfléchissante au moyen d'un traitement aluminisé ou équivalent.

L'imageur 5 comporte également un traitement séparateur de polarisation 6 qui peut être réalisé sous forme d'un dépôt de couches minces, soit sur le prisme de propagation 5a, soit sur le contre-prisme 5b, soit au moyen d'un film collé entre les deux éléments précédemment cités.

L'imageur 5 est ici surmoulé dans une lentille 9 et le boîtier est disposé frontalement à l'arrière de la lentille, un traitement 5e réfléchissant étant alors inclus dans la lentille. Sur le même principe, le boîtier peut être disposé latéralement à cette lentille 9, l'élément réfléchissant 5e étant alors absent.

Le mot «lentille» concerne en particulier un verre, correcteur ou non, destiné à être monté dans une monture de lunettes. Ce verre de lunette ophtalmique présente des fonctionnalités traditionnelles que sont la correction de la vue, l'anti-reflet, l'anti-salissure, l'anti-rayure, par exemple.

La figure 1 illustre un positionnement idéal de l'oeil O centré sur l'axe optique A de sortie de l'imageur, l'image étant également centrée sur cet axe A. Un tel positionnement parfait peut être réalisé par positionnement précis de l'imageur 5 sur ou dans la lentille 9, pour un utilisateur donné. Cependant, une telle lentille équipée de son imageur et généralement montée sur une paire de lunettes ou support équivalent doit pouvoir être utilisée de façon efficace par plusieurs porteurs de morphologie différente.

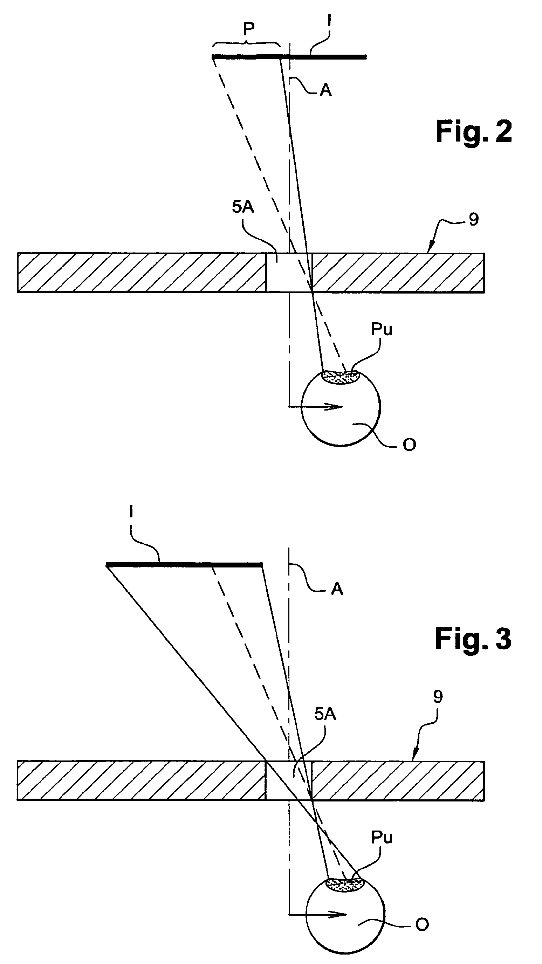

En particulier, l'écart pupillaire, c'est-à-dire l'écart entre les deux pupilles du porteur, est variable selon la personne. II en résulte pour une paire de lunette informative donnée, le problème illustré sur la figure 2.

Est sur cette figure uniquement représentée la lentille 9 avec le contre-prisme 5b, la lame quart d'onde 5c et le miroir de Mangin sphérique 5d, ici schématisé par un cube 5A appelé combineur. Le combineur 5A agit comme une lucarne et, dans le cas d'un oeil O excentré par rapport à l'axe optique A comme représenté sur la figure 2, le combineur bloque une partie des rayons lumineux du fait de ses dimensions définies. II en résulte un phénomène de vignettage qui est un effet optique qui assombrit certaines parties de l'image I, en général sur son pourtour, et qui rend l'observation difficile. Tel que représenté sur la figure 2, seule la partie P de l'image est correctement visible par l'oeil O.

Pour résoudre ce problème, l'invention propose d'adapter la position de l'image 1, comme schématisé sur la figure 3, par réglage de l'afficheur afin que l'image informative 1 soit parfaitement adaptée à à la position de l'oeil du porteur et soit entièrement visible par la lucarne formée par le combineur 5A.

L'invention résout ce problème, tout en proposant un afficheur d'encombrement hors tout qui ne varie pas et présentant une manipulation de réglage confortable.

L'invention propose donc un afficheur ophtalmique comprenant un imageur optique destiné à mettre en forme des faisceaux optiques émis d'un écran miniature d'un système de génération de faisceaux optiques et à les diriger vers l'oeil du porteur pour permettre la visualisation d'une image, ledit imageur présentant un axe optique de sortie, ledit imageur étant intégré à un verre destiné à être monté dans une monture de lunettes, caractérisé en ce qu'il comporte un dispositif de réglage à l'écart pupillaire de l'utilisateur comportant des moyens de réglage de la position de ladite image dans un plan sensiblement perpendiculaire au dit axe optique, ledit dispositif de réglage étant interne à un boîtier contenant ledit système de génération de faisceaux optiques,

ledit système de génération comprend une pièce fixe, dite platine fixe, à laquelle est relié ledit écran grâce une connexion mobile, qui est un élément élastiquement déformable de façon à ce que ledit écran soit translatable selon son plan longitudinal.

Selon l'invention, le boîtier n'assure qu'une fonction de protection aux agressions du milieu ambiant, aux chocs et aux écrasements ainsi qu'une fonction d'étanchéité, et est de préférence amovible, étant monté en dernier lieu. Le boîtier est avantageusement monté par fixation sur la pièce ou platine fixe.

Avantageusement, ledit écran est solidaire d'une seconde platine reliée à la première platine fixe par ladite connexion mobile.

Ledit élément élastiquement déformable, est de préférence constitué d'un étrier déformable.

Les caractéristiques dimensionnelles et le positionnement de cet élément déformable sont calculés par des méthodes de type calcul à éléments finis, afin de contrôler les caractéristiques du déplacement.

Avantageusement, ladite connexion mobile est réglable grâce un dispositif d'actionnement.

Et plus précisément, ledit dispositif d'actionnement est extérieur au dit boîtier.

Selon une première variante, ledit dispositif d'actionnement est constitué d'une molette pourvue d'un cylindre excentré, cette molette tournant sur une partie fixe du boîtier et ce cylindre excentré étant en butée contre ladite seconde platine.

Ce dispositif d'actionnement présente l'avantage de pouvoir être automatiquement précontraint afin d'éviter tout jeu et de doser l'effort à exercer sur la molette pour faciliter le confort de l'utilisateur et éviter toute dégradation. Par ailleurs, par rotation de la molette toujours dans le même sens, il est obtenu toutes les positions souhaitées sur la trajectoire de la platine mobile. Enfin, de par sa relativement grande dimension, une molette est particulièrement adaptée à la réalisation de très petits déplacements précis.

Selon une seconde variante, ledit dispositif d'actionnement est constitué d'une vis vissée sur une partie fixe du boîtier et en butée contre ladite seconde platine.

De préférence, un adaptateur est référencé par rapport à l'imageur et reçoit ledit système de génération pourvu de son dispositif de réglage par emboîtement d'au moins deux plots.

Ce mode de réalisation présente l'avantage de découpler les différentes fonctions optiques et mécaniques. Chaque pièce n'a qu'une seule fonction, ce qui permet d'obtenir une précision maximale, tout autant sur le plan mécanique qu'optique. L'adaptateur assure le positionnement relatif du dispositif sur l'imageur.

Et de préférence, ledit adaptateur est solidaire de ladite platine fixe.

La solidarisation de l'adaptateur avec la lentille peut être réalisée par collage, vissage ou tout moyen approprié.

La liaison entre ledit système et ledit adaptateur peut être amovible.

Avantageusement, ladite platine fixe porte un composant optique associé.

Selon une application préférée, ledit imageur est intégré à une lentille.

L'invention est décrite ci-après plus en détail à l'aide de figures ne représentant qu'un mode de réalisation préféré de l'invention.
La figure 1, vue schématique de dessus d'un afficheur connu, a déjà été précisée plus haut.
La figure 2 est une illustration du problème technique posé par ce type d'afficheur connu.
La figure 3 est une illustration de la solution proposée par un afficheur conforme à l'invention.
La figure 4 est une vue schématique de dessus d'un afficheur conforme à l'invention.
Les figures 5A et 5B sont des vues schématiques du dispositif de réglage à l'écart pupillaire conforme à l'invention.
La figure 6 est une vue de face d'un dispositif de réglage à l'écart pupillaire d'un afficheur conforme à l'invention.
La figure 7 est une vue de dessus de ce même dispositif de réglage.
La figure 8 est une vue en perspective vue de l'arrière de ce même dispositif de réglage.
La figure 9 est une vue schématique d'une première variante de dispositif d'actionnement faisant partie d'un afficheur conforme à l'invention.
La figure 10 est une vue schématique d'une seconde variante de dispositif d'actionnement faisant partie d'un afficheur conforme à l'invention.

L'afficheur conforme à l'invention est donc représenté schématiquement sur la figure 4.

Cet afficheur ophtalmique comprend un imageur optique 10 destiné à mettre en forme des faisceaux optiques émis d'un écran miniature 20 disposé dans un boîtier 30 et à les diriger vers l'oeil du porteur O pour permettre la visualisation d'un contenu informationnel. L'imageur 10 est ici du même type que celui représenté sur la figure 1. Le boîtier 30 est disposé sur la face arrière de la lentille. Est donc également intégré dans la lentille un élément de réflexion 12 à 90° du faisceau de lumière, afin de diriger ce faisceau longitudinalement à l'imageur 10.

Cependant comme il sera facilement compris, l'invention s'applique tout autant à un imageur du type de celui représenté sur la figure 4 qu'à un imageur non associé à un tel élément de réflexion 12, le boîtier 30 étant alors relié à la lentille ou verre de lunette 11 portant cet imageur sur la face latérale de la lentille.

Tout d'abord, un adaptateur 13 est collé avec précision sur la lentille et sur cet adaptateur est fixé le dispositif de réglage comme il sera précisé plus loin. L'adaptateur 13 a deux côtés parfaitement perpendiculaires qui permettent son positionnement précis en vis à vis avec l'imageur et plus précisément en vis à vis de l'élément de réflexion 12.

Le dispositif de réglage contient une platine 21 fixe à laquelle est relié l'écran miniature 20 par une connexion mobile réglable 22. Elle supporte également des composants optiques 23 ici schématisés, par exemple une lentille. C'est à cette platine fixe 21 qu'est fixé l'adaptateur 13.

Par réglage de la connexion 22, par exemple de la position P1 à la position P2 où l'écran est représenté en pointillés, l'écran 20 est translaté selon son plan longitudinal, permettant la visualisation de l'image l1 translatée dans un plan sensiblement perpendiculaire à l'axe optique A, représentée par l'image l2.

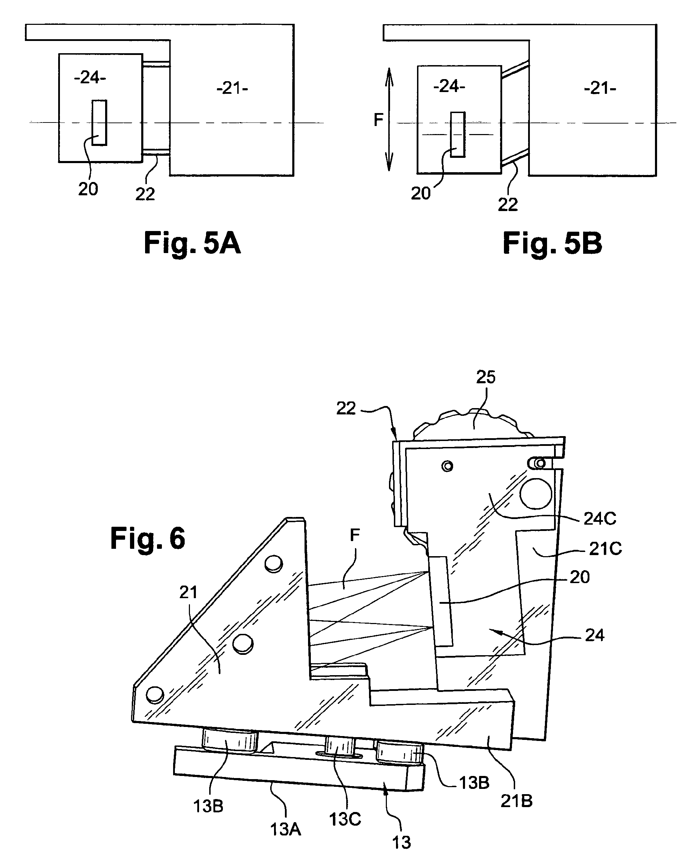

La connexion 22 est représentée schématiquement sur les figures 5A et 5B.

Le système de génération comprend une pièce fixe 21, dite platine fixe, à laquelle est relié l'écran 20 grâce une connexion 22 mobile, de façon à ce que l'écran soit translatable selon son plan longitudinal dans le sens de la flèche F permettant la visualisation de l'image translatée dans un plan sensiblement perpendiculaire à l'axe optique. Pour ce faire, l'écran miniature 20 est solidaire d'une seconde platine 24 reliée à la première platine fixe 21 par la connexion mobile 22.

Ce dispositif de réglage à l'écart pupillaire est représenté précisément selon un mode de réalisation préféré sur les figures 6 à 8. Le boîtier 30 est ici non représenté.

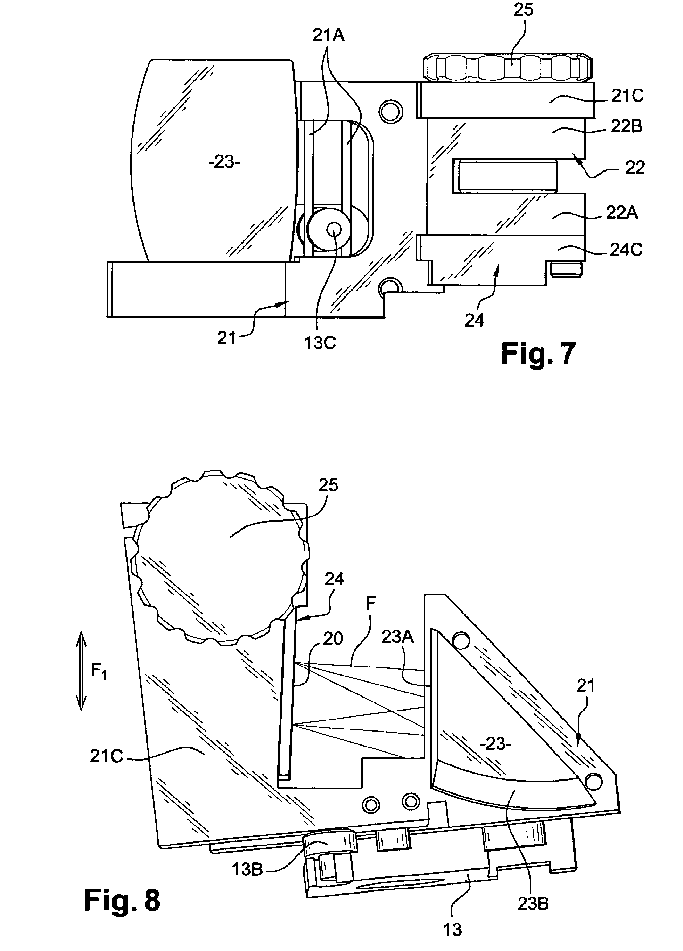

L'adaptateur 13 est une plaquette sensiblement carrée qui est destinée par sa face externe 13A à être collée sur la lentille. A cet adaptateur 13 est reliée la platine fixe 21 par l'intermédiaire de trois plots 13B venant s'emboîter dans des orifices correspondants de l'adaptateur, comme apparent sur la figure 8. Ces trois emboîtements assurent un positionnement relatif exact. Par ailleurs, l'adaptateur 13 comporte un pion de clipage 13 C venant s'encliqueter entre deux tiges 21 A élastiques solidaires de la platine fixe 21 et assurant le maintien relatif et amovible de cette dernière sur l'adaptateur 13.

La platine fixe 21 porte quant à elle le composant optique en aval de l'écran miniature, plus précisément dans ce cas une lentille 23. Cette lentille 23 redirige les faisceaux de lumière F qu'elle reçoit de l'écran 20 par sa face 23A vers l'imageur inséré dans la lentille par sa face 23B.

Cet écran 20 est porté par une seconde platine 24 reliée à la première platine fixe 21 par une connexion mobile constituée d'un élément élastiquement déformable, afin de permettre la translation selon la flèche F1 de l'écran et la translation de la trajectoire des faisceaux optiques F.

Pour ce faire, la platine fixe 21 comporte une base 21 B sensiblement parallèle à l'axe de la face d'entrée 23A de la lentille et une plaque 21 C perpendiculaire à cette base et disposée sur un de ses côtés. A cette branche 21 C est reliée la première branche 22B d'un étrier déformable 22, dont l'autre branche 22A est reliée à une plaque 24C de la seconde platine 24. Ces liaisons sont particulièrement visibles sur la figure 7. Les plaques 21 C et 24C comportent à leur extrémité une fente dans laquelle est emboîté un pion porté quant à lui par chacune des branches 22A et 22B.

Ces branches 22A et 22B peuvent se déplacer relativement selon la flèche F1 grâce à un dispositif d'actionnement extérieur au dit boîtier, constitué ici d'une molette 25.

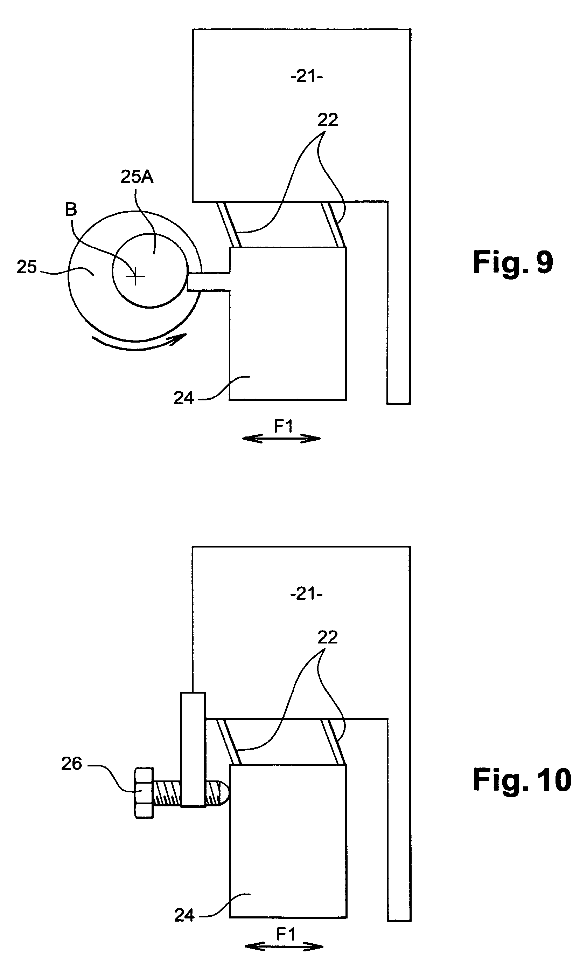

Bien que visible uniquement de l'extérieur sur les figures 6 à 8, ce dispositif d'actionnement par molette 25 est schématisé sur la figure 9 et sera ainsi compris par l'homme du métier.

Sur cette figure, sont schématisés la platine fixe 21, la seconde platine mobile 24 et l'élément élastiquement déformable 22.

La molette 25 peut être tournée autour de son axe B de rotation et porte un cylindre excentré 25A qui est quant à lui en butée contre une face de la seconde platine 24. Comme précisément représenté sur la figure 9, lors l'un tour de la molette, ce cylindre pousse la seconde platine 24 puis la relâche, la seconde platine revenant alors dans l'autre sens grâce à l'élasticité de la connexion 22 et restant en butée contre le cylindre 25A.

En variante, il est possible d'utiliser une vis au lieu d'une molette comme schématisé sur la figure 10 ou plus généralement une butée réglable. Une vis 26 est alors vissée dans un alésage taraudé solidaire de la platine fixe 21 et son extrémité est en butée contre une face de la platine mobile 24.

Bien que le boîtier 30 ne soit pas toujours représenté sur les figures, la platine fixe 21 et la seconde platine 24 sont contenues dans ce boîtier comme schématisé sur la figure 4.

## Revendications

1. Afficheur ophtalmique comprenant un imageur optique (10) destiné à mettre en forme des faisceaux optiques émis d'un écran miniature (20) d'un système de génération de faisceaux optiques et à les diriger vers l'oeil (O) du porteur pour permettre la visualisation d'une image (I), ledit imageur (10) présentant un axe optique (A) de sortie, ledit imageur étant intégré à un verre destiné à être monté dans une monture de lunettes, **caractérisé en ce qu'**il comporte un dispositif de réglage à l'écart pupillaire de l'utilisateur comportant des moyens de réglage de la position de ladite image dans un plan sensiblement perpendiculaire au dit axe optique (A), ledit dispositif de réglage
interne à un boîtier (30) contenant ledit système de génération de faisceaux optiques (F), **en ce que** ledit système de génération comprend une pièce fixe, dite platine fixe, (21) à laquelle est relié ledit écran grâce une connexion (22) mobile, qui est un élément élastiquement déformable (22), de façon à ce que ledit écran soit translatable selon son plan longitudinal.

2. Afficheur selon la revendication 1, **caractérisé en ce que** ledit écran est solidaire d'une seconde platine (24) reliée à la première platine fixe (21) par ladite connexion mobile.

3. Afficheur selon la revendication 1 ou 2, **caractérisé en ce que** ledit élément élastiquement déformable est constitué d'un étrier déformable (22).

4. Afficheur selon l'une des revendications précédentes, **caractérisé en ce que** ladite connexion mobile est réglable grâce un dispositif d'actionnement.

5. Afficheur selon la revendication précédente, **caractérisé en ce que** ledit dispositif d'actionnement est extérieur au dit boîtier (30).

6. Afficheur selon la revendication 4, **caractérisé en ce que** ledit dispositif d'actionnement est constitué d'une molette (25) pourvue d'un cylindre excentré (25A), cette molette tournant sur une partie fixe du boîtier (30) et ce cylindre excentré étant en butée contre ladite seconde platine (24).

7. Afficheur selon la revendication 4, **caractérisé en ce que** ledit dispositif d'actionnement est constitué d'une vis (26) vissée sur une partie fixe du boîtier (30) et en butée contre ladite seconde platine (24).

8. Afficheur selon l'une des revendications précédentes, **caractérisé en ce qu'**un adaptateur (13) est référencé par rapport à l'imageur et reçoit ledit système de génération pourvu de son dispositif de réglage par emboîtement d'au moins deux plots (13B).

9. Afficheur selon la revendication précédente, **caractérisé en ce que** ledit adaptateur est solidaire de ladite platine fixe.

10. Afficheur selon la revendication 8 ou 9, **caractérisé en ce que** la liaison entre ledit système et ledit adaptateur (13) est amovible.

11. Afficheur selon l'une des revendications 1 à 9, **caractérisé en ce que** ladite platine fixe (21) porte un composant optique associé (23).

## Claims

1. A ophthalmic display comprising an optical imager (10) for shaping optical beams emitted from a miniature screen (20) of an optical beam generating system and directing them towards the eye (O) of the user to enable an image (I) to be visualized, said imager (10) having an output optical axis (A), said imager being integrated into a glass intended to be mounted in a glasses frame, **characterized in that** it comprises a device for adjustment to the user's pupil spacing including means for adjusting the position of said image in a plane substantially perpendicular to said optical axis (A), said adjustment device inside a housing (30) containing said optical beam generating system (F), **in that** said generating system comprises a stationary piece, called stationary plate (21), to which said screen is connected using a mobile connection (22), which is an elastically deformable element (22), so that the screen can be translated along its longitudinal plane.

2. The imager according to claim 1, **characterized in that** said screen is secured to a second plate (24) connected to the first stationary plate (21) by said mobile connection.

3. The imager according to claim 1 or 2, **characterized in that** said elastically deformable element is made up of a deformable stirrup (22).

4. The imager according to one of the preceding claims, **characterized in that** said mobile connection can be adjusted using an actuating device.

5. The imager according to the preceding claim, **characterized in that** said actuating device is outside said housing (30).

6. The imager according to claim 4, **characterized in that** said actuating device is formed by a turning grip (25) provided with an eccentric cylinder (25A), this turning grip rotating on a stationary part of the housing (30) and this eccentric cylindrical abutting against said second plate (24).

7. The imager according to claim 4, **characterized in that** said actuating device is formed by a screw (26) screwed on a stationary portion of the housing (30) and abutting against said second plate (24).

8. The imager according to one of the preceding claims, **characterized in that** an adapter (13) is referenced relative to the imager and receives said generating system provided with its adjusting device by interlocking at least two lugs (13B).

9. The imager according to the preceding claims, **characterized in that** said adapter is secured to said stationary plate.

10. The imager according to claim 8 or 9, **characterized in that** the connection between said system and said adapter (13) is removable.

11. The imager according to one of claims 1 to 9, **characterized in that** said stationary plate (21) has an associated optical component (23).

## Patentansprüche

1. Ophtalmisches Anzeigegerät, das einen Bildgenerator (10) umfasst, der dazu bestimmt ist, die von einem Miniaturbildschirm (20) eines Systems zur Erzeugung optischer Bündel ausgesendeten optischen Bündel zu formen und sie in Richtung Auge (O) des Trägers zu senden, um die Visualisierung eines Bildes (I) zu erlauben, wobei der Bildgenerator (10) eine optische Ausgangsachse (A) aufweist, wobei der Bildgenerator in ein Glas integriert ist, das dazu bestimmt ist, in eine Brillenfassung montiert zu sein, **dadurch gekennzeichnet, dass** es eine Vorrichtung zur Einstellung auf den Pupillenabstand des Benutzers umfasst, die Mittel zu Einstellung der Position des Bildes in einer Ebene etwa senkrecht zur optischen Achse (A) aufweist, wobei die in einem Gehäuse (30) untergebrachte Einstellungsvorrichtung das System zur Erzeugung optischer Bündel (F) umfasst, und dass das Erzeugungssystem ein festes Teil, feste Platte (21) genannt, umfasst, mit der der Bildschirm anhand einer mobilen Verbindung (22) verbunden ist, die ein elastisches Element (22) ist, das derart verformbar ist, dass der Bildschirm in seiner Längsebene verschiebbar ist.

2. Anzeigegerät nach Anspruch 1, **dadurch gekennzeichnet, dass** der Bildschirm mit einer zweiten Platte (24) verbunden ist, die mit der ersten festen Platte (21) durch die mobile Verbindung verbunden ist.

3. Anzeigegerät nach Anspruch 1 oder 2, **dadurch gekennzeichnet, dass** das elastisch verformbare Element von einem verformbaren Bügel (22) gebildet wird.

4. Anzeigegerät nach einem der vorangehenden Ansprüche, **dadurch gekennzeichnet, dass** die mobile Verbindung mit einer Betätigungsvorrichtung einstellbar ist.

5. Anzeigegerät nach vorangehendem Anspruch, **dadurch gekennzeichnet, dass** sich die Betätigungsvorrichtung außerhalb des Gehäuses (30) befindet.

6. Anzeigegerät nach Anspruch 4, **dadurch gekennzeichnet, dass** die Betätigungsvorrichtung aus einem Rädchen (25) mit einem exzentrischen Zylinder (25A) besteht, wobei dieses Rädchen auf einem festen Abschnitt des Gehäuses (30) dreht und dieser exzentrische Zylinder an die zweite Platte (24) anschlägt.

7. Anzeigegerät nach Anspruch 4, **dadurch gekennzeichnet, dass** die Betätigungsvorrichtung aus einer Schraube (26) besteht, die auf einen festen Abschnitt des Gehäuses (30) geschraubt ist und an die zweite Platte (24) anschlägt.

8. Anzeigegerät nach einem der vorangehenden Ansprüche, **dadurch gekennzeichnet, dass** sich ein Adapter (13) im Verhältnis zum Bildgenerator befindet und das mit seinem Einstellungssystem ausgestattete Erzeugungssystem durch Einrasten von mindestens zwei Stiften (13B) aufnimmt.

9. Anzeigegerät nach vorangehendem Anspruch, **dadurch gekennzeichnet, dass** der Adapter mit der festen Platte verbunden ist.

10. Anzeigegerät nach Anspruch 8 oder 9, **dadurch gekennzeichnet, dass** die Verbindung zwischen dem System und dem Adapter (13) lösbar ist.

11. Anzeigegerät nach einem der Ansprüche 1 bis 9, **dadurch gekennzeichnet, dass** die feste Platte (21) ein verbundenes optisches Bauteil (23) trägt.
